# FASCICULE DE BREVET EUROPEEN

(11) **EP 1 824 659 B1**
(45) Date de publication et mention de la délivrance du brevet: **02.10.2013**
(21) Numéro de dépôt: 05817444.2
(22) Date de dépôt: 15.11.2005
(51) Int. Cl.: B29C 49/68, B29B 13/02

(54) **PROCEDE ET INSTALLATION DE FABRICATION DE RECIPIENTS**
VERFAHREN UND ANLAGE ZUR BEHÄLTERHERSTELLUNG
METHOD AND INSTALLATION FOR THE PRODUCTION OF CONTAINERS

(30) Priorité: 22.11.2004 FR 0412372
(43) Date de publication de la demande: 29.08.2007
(73) Titulaire: SIDEL PARTICIPATIONS, 76930 Octeville-sur-Mer (FR)
(72) Inventeur: FEUILLOLEY, Guy, Sidel, F-76930 Octeville sur Mer (FR); DESOUTTER, Luc, Sidel, F-76930 Octeville Sur Mer (FR)
(74) Mandataire: Louiset, Raphael
(86) Numéro de dépôt international: PCT/FR2005/002826
(87) Numéro de publication internationale: WO 2006/056673

(56) Documents cités:
- EP-A- 0 564 354
- EP-A- 0 571 262
- EP-A- 0 620 099
- DE-A1- 10 106 607
- DE-A1- 19 603 974
- FR-A- 2 561 986
- FR-A- 2 762 799
- US-A1- 2002 062 161
- PATENT ABSTRACTS OF JAPAN vol. 006, no. 163 (M-152), 26 août 1982 (1982-08-26) & JP 57 080030 A (MITSUBISHI PLASTICS IND LTD), 19 mai 1982 (1982-05-19)
- PATENT ABSTRACTS OF JAPAN vol. 009, no. 046 (M-360), 27 février 1985 (1985-02-27) & JP 59 184626 A (MITSUBISHI JUKOGYO KK; others: 01), 20 octobre 1984 (1984-10-20)

## Description

L'invention a trait à la fabrication des récipients.

Elle concerne plus particulièrement un procédé selon la revendication 1, ainsi qu'une installation selon la revendication 14, pour la fabrication des récipients - notamment des bouteilles - à partir d'ébauches en matière thermoplastique.

Un tel procédé comporte une première étape lors de laquelle les ébauches sont chauffées, au sein d'une unité de chauffe appropriée, puis une seconde étape lors de laquelle les ébauches sont introduites chaudes dans une unité de soufflage ou d'étirage-soufflage à moules multiples pour être conformées en récipients.

En sortie de l'unité de soufflage ou d'étirage-soufflage, les récipients ainsi formés seront dirigés soit vers une unité de stockage dans l'attente d'être remplis ultérieurement, soit directement vers une unité de remplissage.

Rappelons qu'une ébauche de récipient comprend un col, destiné à recevoir le bouchon fermant le récipient à naître et possédant déjà ses cotes finales, prolongé par un corps dont la mise en forme conduira au récipient proprement dit.

La chauffe des ébauches est généralement réalisée au sein d'un four équipé d'une batterie de lampes halogènes tubulaires devant lesquelles défilent les ébauches, tout en étant mises en rotation sur elles-mêmes. Plus précisément, un four contient plusieurs modules élémentaires, contenant chacun plusieurs lampes, chacune des lampes étant pilotée individuellement pour que, en définitive, à la sortie du four, la température du corps de chacune des ébauches soit supérieure à la température de transition vitreuse de leur matière constitutive et qu'un profil de chauffe soit obtenu sur chaque ébauche, lequel profil est prédéterminé pour que la répartition de la matière soit optimisé sur le récipient à obtenir.

Ce mode de chauffe, illustré par le document EP 0 620 099, présente un certain nombre d'inconvénients.

Premièrement, son rendement énergétique (c'est-à-dire le rapport de la puissance absorbée par les ébauches à la puissance consommée par les lampes) est extrêmement faible, de l'ordre de 11 à 15 %. Cela tient à la diffusion spatiale du rayonnement émis par les lampes, dont une fraction seulement rencontre le corps des ébauches. La faiblesse de ce rendement grève les cadences de production.

Ensuite, le profil de chauffe (c'est-à-dire la courbe des températures mesurées sur la longueur de l'ébauche) ne peut être obtenu de manière précise. En effet, compte tenu de l'effet de diffusion les rayonnements des lampes interfèrent, de sorte qu'il est chimérique de vouloir régler précisément l'intensité du rayonnement cumulé à une distance donnée des lampes.

Pour pallier cet inconvénient, on a déjà pensé à faire défiler les ébauches à une distance des lampes aussi faible que possible. Mais on assiste alors à un indésirable problème de surchauffe à la surface des ébauches, phénomène qui ne peut être atténué que par l'installation et la mise en oeuvre d'un imposant système de ventilation.

Par ailleurs, on assiste également à un important phénomène de convection thermique, par lequel les courants d'air ascendants transfèrent une partie du rayonnement émis vers la partie sommitale de l'ébauche. Or il est nécessaire de maintenir le col de cette dernière à une température modérée afin d'en conserver les cotes originelles.

Aussi, afin de limiter la chauffe incidente du col par convection thermique, est-il apparu judicieux d'orienter les ébauches col en bas. Cette mesure s'étant avérée insuffisante dans certains cas, on l'a assortie d'une ventilation du col. Quoi qu'il en soit, cette orientation des ébauches nécessite, en entrée de l'unité de chauffe, une opération de retournement des préformes, car les préformes sont généralement introduites col en haut dans le four, de même qu'une opération de retournement, soit des préformes avant leur introduction dans le moule lorsque l'étape d'étirage-soufflage est réalisée col en haut (ce qui est le cas le plus courant), soit des récipients en sortie d'installation, en vue de leur stockage ou de leur remplissage. Ces opérations de retournement nécessitent l'installation et la mise en oeuvre de dispositifs appropriés qui alourdissent l'installation et en grèvent le coût.

Afin de pallier notamment aux inconvénients précités, le procédé, suivant l'invention, de fabrication d'un récipient à partir d'une ébauche en matière thermoplastique, comporte :
- une étape de chauffe de l'ébauche réalisée au moyen d'au moins un faisceau de rayonnement électromagnétique cohérent, puis
- une étape de formage du récipient à partir de l'ébauche ainsi chauffée.

Il est également proposé, suivant l'invention, une installation pour la fabrication de récipients à partir d'ébauches en matière thermoplastique, qui comporte une unité de chauffe des ébauches en vue du formage des récipients à partir des ébauches ainsi chauffées. L'installation définit un chemin destiné à être suivi par les ébauches au sein de l'unité de chauffe, laquelle comporte au moins une source de rayonnement électromagnétique cohérent dirigée vers une zone située sur le chemin des ébauches.

L'on peut ainsi concentrer le rayonnement sur une partie localisée de l'ébauche, ce qui permet d'obtenir un profil de température proche d'un profil prédéterminé, l'absence quasi-totale de diffusion et de convection thermique permettant de chauffer l'ébauche alors qu'elle est orientée avec son col en haut sans que celui-ci ne subisse de chauffe incidente susceptible d'altérer ses cotes.

Plus précisément, le faisceau de rayonnement électromagnétique (tel qu'un laser émis par exemple par une diode laser) est de préférence dirigé vers le corps de l'ébauche. Le rayonnement est de préférence émis dans l'infrarouge court, autrement dit à une longueur d'onde comprise entre 700 nm et 1600 nm environ.

La chauffe de l'ébauche est de préférence réalisée au moyen d'une pluralité de faisceaux de rayonnement électromagnétique adjacents et/ou superposés. En pratique, la chauffe peut être réalisée au moyen d'une pluralité de diodes laser juxtaposées et/ou superposées, par exemple sous forme d'une ou plusieurs barrettes.

Le ou chaque faisceau peut être linéaire, ou plan ; il est par exemple dirigé dans une direction générale prédéterminée, tandis que l'on fait suivre à l'ébauche, au moins localement, un chemin soit sensiblement perpendiculaire, soit sensiblement parallèle à la direction du faisceau.

Dans l'étape de chauffe, on entraîne de préférence l'ébauche en rotation autour d'un axe prédéterminé, par exemple confondu avec un axe de révolution de l'ébauche, afin d'obtenir une chauffe uniforme sur la circonférence de celle-ci.

En outre, on peut ventiler le col de l'ébauche, afin d'évacuer le trop-plein d'air chaud.

Suivant un mode de réalisation, dans l'étape de chauffe, le faisceau subit au moins une réflexion sur une surface réfléchissante.

L'unité de chauffe comporte par exemple une enceinte comprenant une première et une deuxième parois en regard sensiblement parallèles au chemin des ébauches, placées de part et d'autre de celui-ci et délimitant conjointement un volume interne, la première paroi étant munie d'une pluralité de fentes parallèles superposées en regard de chacune desquelles est placée, du côté opposé au volume interne, une rangée de sources de rayonnement.

Suivant un mode de réalisation, la seconde paroi au moins présente, du côté du volume interne, une surface interne réfléchissante.

Afin de réaliser la ventilation du col de l'ébauche, l'unité de chauffe peut comporter un système de ventilation propre à générer un flux d'air transitant par une zone située à l'aplomb de ladite enceinte.

Suivant une variante de réalisation, l'installation comprend deux unités de chauffe successives de ce type.

Suivant un autre mode de réalisation, le chemin des ébauches étant sensiblement circulaire, l'unité de chauffe comporte une pluralité d'enceintes successives disposées le long du chemin, chaque enceinte présentant deux parois cylindriques en regard disposées de part et d'autre du chemin et définissant conjointement une cavité interne, chaque paroi présentant plusieurs facettes réfléchissantes adjacentes tournées vers la cavité, la source de rayonnement électromagnétique étant dirigée vers l'une de ces facettes.

L'unité de chauffe comprend par exemple un écran opaque adjacent à l'une des facettes, pour absorber le faisceau après que celui-ci a subi plusieurs réflexions sur les facettes.

Quel que soit le mode de réalisation retenu, l'unité de chauffe comprend de préférence des moyens pour entraîner les ébauches en rotation autour de leur axe de révolution.

D'autres objets et avantages de l'invention apparaîtront à la lumière de la description faite ci-après en référence aux dessins annexés dans lesquels :
- la figure 1 est une vue schématique d'une installation pour la fabrication de récipients à partir d'ébauches en matière thermoplastique ;
- les figures 2 et 3 sont des vues en perspective d'un bloc et d'une barrettes de diodes laser pouvant, au choix, équiper une installation suivant l'invention ;
- la figure 4 est une vue schématique en perspective montrant la structure interne d'une barrette de diodes laser ;
- la figure 5 est un diagramme illustrant l'efficacité comparée de trois sources laser différentes pour le chauffage d'un PET ;
- la figure 6 est une vue schématique en perspective illustrant une unité de chauffe pour une installation de fabrication de récipients, suivant un premier exemple de réalisation ;
- la figure 7 est une vue d'élévation en coupe illustrant l'unité de chauffe de la figure 6 ;
- la figure 8 est une vue schématique en perspective montrant une ébauche de récipient exposée à un faisceau laser dans une unité de chauffe telle que représentée sur la figure 7 ;
- la figure 9 est une vue schématique en perspective illustrant une unité de chauffe pour une installation de fabrication de récipients, suivant un deuxième exemple de réalisation ;
- la figure 10 est une vue schématique en perspective similaire à la figure 9, illustrant également une unité de chauffe, suivant une variante du deuxième exemple de réalisation ;
- la figure 11 est une vue schématique en plan de dessus illustrant une unité de chauffe pour une installation de fabrication de récipients, suivant un troisième exemple de réalisation ;
- la figure 12 est une vue en plan de dessus, à échelle supérieure, d'un détail de l'unité de chauffe représenté sur la figure 11 ;
- la figure 13 est une vue illustrant en perspective le détail représenté sur la figure 12.

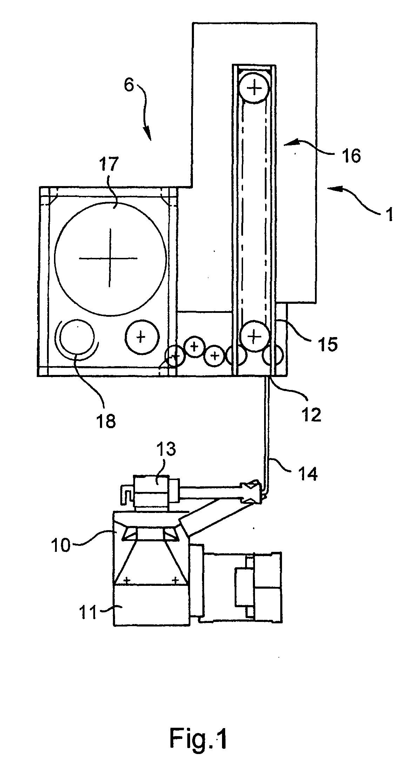

Sur la figure 1 est représentée une installation 1 de fabrication de récipients, tels que des bouteilles, à partir d'ébauches 2, ici des préformes, en matière thermoplastique. Il est rappelé ici que le terme « ébauche » couvre non seulement une préforme, mais également toute pièce intermédiaire entre la préforme et le récipient final. Certains procédés en effet comportent deux étapes de formage successives, à savoir une première étape de formage d'un récipient intermédiaire à partir de la préforme, puis, après un certain laps de temps, une seconde étape de formage du récipient final à partir du récipient intermédiaire.

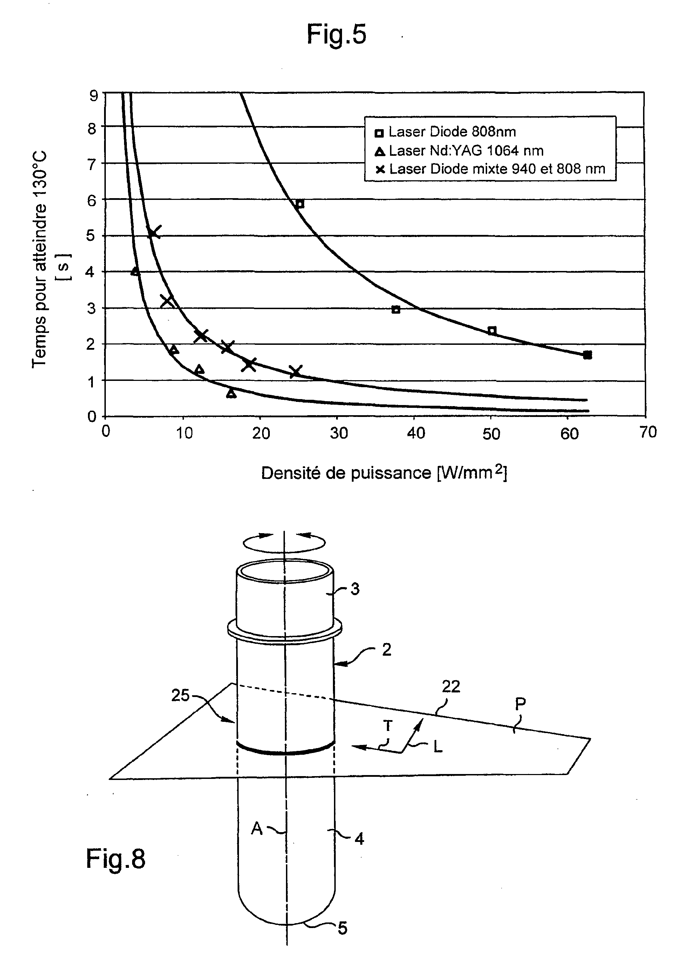

Une ébauche 2, en forme de préforme, est représentée à grande échelle sur la figure 8. Il s'agit d'une pièce moulée en forme d'éprouvette, présentant une symétrie de révolution autour d'un axe A et qui comporte un col 3, destiné, dans toute la mesure du possible, à ne subir aucune déformation lors du formage du récipient, ainsi qu'un corps 4 terminé par un fond 5 et destiné à être chauffé puis mis en forme. Sans pour autant se limiter à un telle application, on suppose dans la suite de la description que les récipients sont formés directement à partir des préformes, de sorte que par commodité ce terme sera employé indifféremment pour désigner les ébauches ou les préformes.

Les récipients sont par exemple réalisés en polyéthylènetherephtalate (PET), en polyéthylènenaphtalate (PEN), ou toute autre matière thermoplastique appropriée.

Comme représenté sur la figure 1, l'installation 1 comprend une unité d'alimentation 10 qui fournit les préformes 2 à une unité de formage 6. L'unité d'alimentation 10 comporte par exemple une trémie 11 dans laquelle sont mises en vrac les préformes 2, fabriquées préalablement par moulage, cette trémie 11 étant reliée à une entrée 12 de l'unité de formage 6 par un trieur 13 qui isole et positionne les préformes 2 (froides, c'est-à-dire à température ambiante) sur une glissière 14.

Les préformes 2 sont ensuite montées sur une chaîne de transfert 15, puis chauffées au défilé au sein d'une unité de chauffe 16 avant d'être introduites chaudes dans une unité de soufflage 17 (ou d'étirage-soufflage) du type carrousel à moules multiples.

Les récipients sont ensuite transférés, au moyen d'un convoyeur 18, tel qu'une une roue munie d'empreintes, depuis les moules de l'unité de soufflage 17 à une sortie de l'unité de formage 6.

Au sein de l'unité de chauffe 16, le chauffage des préformes 2 est réalisée au moyen d'au moins un faisceau 22 de rayonnement électromagnétique cohérent.

A cet effet, l'installation 1 définit au sein de l'unité de chauffe 16 un chemin 23 prédéterminé suivi par les préformes 2 lors de l'étape de chauffe. Plus précisément, ce chemin 23 est défini par une chaîne transporteuse (non représentée) munie de maillons articulés les uns par rapport aux autres et auxquels sont suspendues les préformes 2. Cette technique d'entraînement est bien connue de l'homme du métier et ne sera pas décrite en détails ; précisons toutefois que chaque maillon comprend des moyens d'accrochage sous la forme d'un suspensoir, appelé « tournette » dans le langage commun de la technique, qui vient s'emboîter dans ou sur le col 3 de la préforme 2, ce suspensoir présentant une partie conformée en pignon qui engrène une crémaillère fixe longeant la chaîne, en sorte qu'au fur et à mesure de l'avancée de celle-ci les suspensoirs sont entraînés - avec leurs préformes - en rotation.

L'unité de chauffe 16 comporte au moins une source 24 de rayonnement électromagnétique cohérent dirigée vers une zone cible 25 située sur le chemin 23 des préformes 2, et par laquelle celles-ci transitent, comme nous le verrons ci-après.

Dans ce qui suit, on présente, dans un premier temps, le choix de la source 24 de rayonnement électromagnétique pour la chauffe des préformes (§1), puis, dans un deuxième temps, on décrit l'unité de chauffe 16 ainsi que le procédé de chauffe correspondant, suivant trois exemples de réalisation (§2).

### 1. Choix de la source de rayonnement électromagnétique

Des essais ont démontré que, sur l'ensemble du spectre lumineux, le rayonnement utile pour la chauffe d'une matière thermoplastique tel qu'un PET (matière dans laquelle sont classiquement réalisée les préformes de récipients pour les applications les plus courantes) se situe dans le domaine infrarouge court, c'est-à-dire pour des longueurs d'onde comprises entre 700 nm et 1600 nm.

Plusieurs lasers disponibles sur le marché se sont révélés donner satisfaction pour l'application à la chauffe des thermoplastiques (les essais conduits par les inventeurs ont été effectués avec un PET).

Une préforme en PET présente généralement une épaisseur de paroi comprise entre 1 mm et 3 mm, tout dépendant du type de récipient que l'on souhaite obtenir.

Un premier essai a été conduit par les inventeurs sur des éprouvettes en PET d'une épaisseur de 3 mm avec trois sources laser émettant dans l'infrarouge proche, à savoir :
1. premièrement, un laser de type Nd:YAG (ce type de laser comporte un amplificateur à grenat d'aluminium et d'yttrium dopé au Néodyme ; l'abréviation est l'acronyme de l'anglais « Yttrium Aluminium Garnet »), d'une puissance de 4,4 kW, générant un faisceau infrarouge d'une longueur d'onde de 1064 nm,
2. deuxièmement, un laser diode de type mixte, d'une puissance de 3 kW, générant un faisceau infrarouge combinant deux longueurs d'onde de 808 nm et 940 nm respectivement, et
3. troisièmement, un laser diode d'une puissance de 500 W générant un faisceau infrarouge d'une longueur d'onde de 808 nm.

Le diagramme de la figure 5 montre pour chacun de ces lasers la courbe du temps mis par le matériau pour atteindre la température de 130°C à coeur (il s'agit en fait de la température à laquelle on souhaite chauffer des préformes en PET), en fonction de la densité de puissance transmise.

On constate que, si l'efficacité du laser Nd:YAG apparaît supérieure à celle des lasers diode, les courbes sont néanmoins voisines, ce qui montre que l'on peut choisir le laser en fonction d'autres paramètres que la seule efficacité, notamment la forme du faisceau, l'encombrement de la source et, bien évidemment, son coût.

En outre, il s'est avéré que le choix du laser dépend également de la nécessité de préserver le matériau d'une cristallisation incontrôlée. Un compromis est donc nécessaire. Bien que le Nd:YAG ait prouvé son efficacité, on lui préférera donc le laser diode, moins onéreux et moins encombrant, pour une différence d'efficacité imperceptible dans l'application à la chauffe des préformes en matière thermoplastique.

Si les essais ont montré que le domaine retenu pour le rayonnement est celui de l'infrarouge court, ils ont également montré que, en deçà de 1000 nm, le choix de la longueur d'onde a peu d'impact sur la qualité de chauffe (par « chauffe de qualité », on entend une chauffe qui permet non seulement un temps d'exposition réduit, mais également une bonne précision et une bonne diffusion du rayonnement dans l'épaisseur du matériau).

Par contre, à longueur d'onde égale, les paramètres suivants : forme du faisceau, profil énergétique, densité de puissance, ont une incidence importante sur la qualité de chauffe.

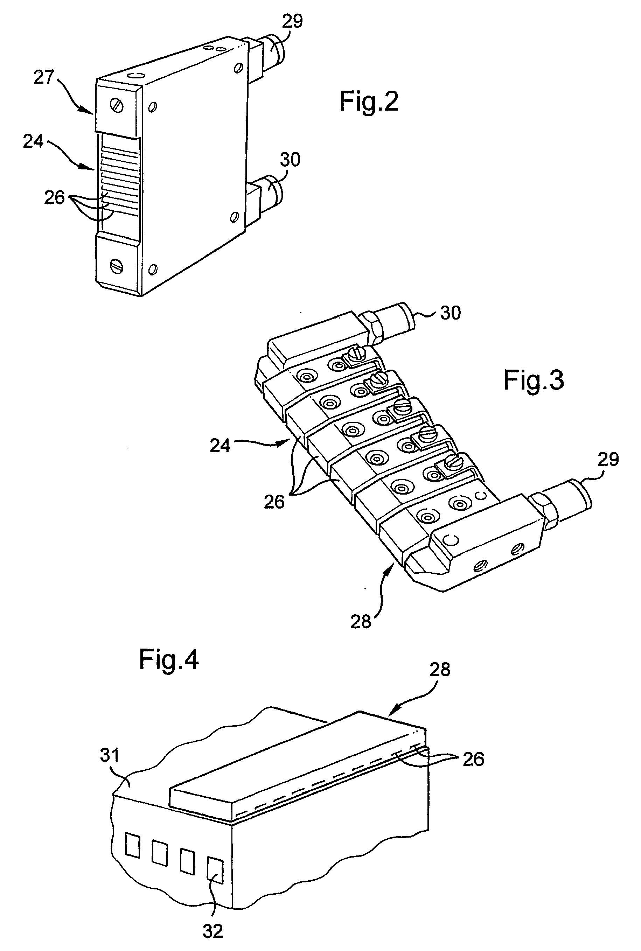

Comme nous le verrons ci-après, le premier exemple de réalisation met en oeuvre un faisceau 22 plan, généré par une diode 26 laser à laquelle est adjointe une lentille d'étalement. Divers constructeurs proposent des diodes laser qui peuvent se présenter seules ou assemblées en barrettes, comme représenté sur les figures 2 et 3.

Sur la figure 2 est représenté un bloc 27 de diodes 26 empilées d'une puissance totale de 1200 W, commercialisé par la société Thalès sous les références TH-C17xx-M1 ou TH-C55xx-M1. Chaque diode 26 génère un faisceau laser plan, en sorte que le bloc génère plusieurs faisceaux plans superposés qui peuvent être parallèles ou divergents.

Sur la figure 3 est représentée une barrette 28 de diodes 26 d'une puissance de 40 W chacune, chaque diode 26 générant un faisceau plan. La barrette 28 génère ainsi un faisceau plan, formé par la juxtaposition des faisceaux générés par toutes les diodes. Une barrette de ce type est commercialisée par la société Thalès, sous les références TH-C1840-P ou TH-C1841-R.

Comme cela est visible sur les figures 2 et 3, le bloc 27 et la barrette 28 sont tous deux munis d'un circuit interne de refroidissement à eau, dont on aperçoit sur les figures les canalisations d'amenée 29 et d'évacuation 30 de l'eau.

Sur la figure 4 est représentée de manière schématique la structure d'une barrette 28 de diodes 26. Les diodes 26 sont conjointement montées et soudées sur un support 31 muni de canalisations 32 perpendiculaires aux faisceaux 22 et parcourues par le liquide de refroidissement.

### 2. Réalisation de l'unité de chauffe

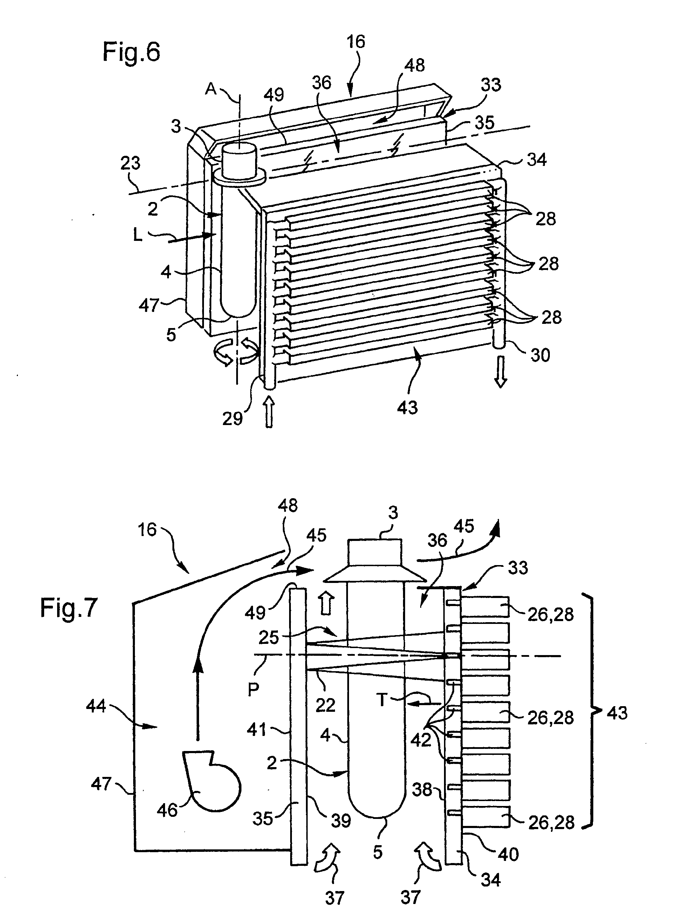

L'on décrit à présent plus en détails l'unité de chauffe suivant trois exemples distincts de réalisation, en référence aux figures 6 à 11.

### 2.1. Exemple 1

Le premier exemple de réalisation est décrit en référence aux figures 6 à 8.

Comme cela est visible sur la figure 6, le chemin 23, représenté par une ligne en traits mixtes, suivi par les préformes 2 au sein de l'unité de chauffe 16, est sensiblement rectiligne et définit une direction L dite longitudinale.

Dans cet exemple, l'unité de chauffe 16 comporte une enceinte 33 comprenant une première et une deuxième parois 34, 35 verticales en regard, qui s'étendent sensiblement parallèlement au chemin 23 en étant placées de part et d'autre de celui-ci.

Les parois 34, 35 délimitent conjointement un volume interne 36 dans lequel défilent longitudinalement les préformes 2.

Comme cela est visible sur la figure 7, les parois 34, 35 s'étendent sur une hauteur sensiblement égale à la longueur du corps 4 de la préforme 2. Celle-ci est orientée col en haut, le col 3 dépassant de l'enceinte 33 au-dessus des parois 34, 35. L'enceinte 33 est ouverte vers le bas pour permettre la circulation d'un flux d'air ascendant 37 assurant une certaine ventilation de l'enceinte 33 pour éliminer la chaleur émise par le corps 4 de l'ébauche 2 chauffée.

Chaque paroi 34, 35 présente une face interne 38, 39, respective tournée vers le volume interne 36, ainsi qu'une face externe 40, 41 respective, opposée.

La première paroi 34 est munie d'une pluralité de fentes 42 parallèles, horizontales, superposées, en regard de chacune desquelles est placée, du côté de la face externe 40, une barrette 28 de diodes laser, telle que décrite ci-dessus.

Comme cela est visible sur la figure 6, l'unité de chauffe comporte ainsi une matrice 43 de diodes laser formée d'une pluralité de barrettes 28 superposées, qui s'étend sensiblement en regard de toute la hauteur des corps 4 des préformes 2. Les barrettes 28 peuvent être refroidies au moyen de circuits propres, raccordés à une canalisation d'amenée 29 et d'évacuation 30 communes du liquide de refroidissement.

Chaque diode émet un faisceau 22 orienté dans une direction générale T transversale par rapport au chemin 23, et s'étendant dans un plan médian P horizontal parallèle à ce chemin 23.

Chaque fente 42 soumet le faisceau 22 qui la traverse à un effet de diffusion en sorte que le faisceau 22 a tendance à diverger de part et d'autre du plan médian horizontal P.

Par ailleurs, les faces internes 38, 39 des parois 34, 35 sont réfléchissantes, en sorte que lé faisceau 22 subit plusieurs réflexions successives et, par conséquent, traverse plusieurs fois la préforme 2 avant de perdre son énergie. Il en résulte une amélioration du rendement énergétique et une réduction du temps de chauffe des préformes 2.

Pour la réalisation de la matrice 43 de diodes, on pourra utiliser plusieurs barrettes 28 superposées de diodes de 40W, du type de celle présentée ci-dessus (Cf. §1) et illustrée sur la figure 3.

Sur la figure 7, l'angle de divergence du faisceau 22 est exagéré afin de rendre visible ce double phénomène de divergence et de réflexion.

L'entraînement en rotation de la préforme 2 autour de son axe A permet, en sortie d'unité de chauffe, d'obtenir un profil de température sensiblement constant sur la circonférence du corps 4.

En outre, il est possible de réguler la puissance des diodes 26 de manière à obtenir un profil souhaité de température qui soit non uniforme sur la longueur de la préforme 2, par exemple en vue d'obtenir in fine un récipient de forme cintrée. Dans un tel exemple, on réglera les barrettes 28 médianes à une puissance inférieure à celle des barrettes 28 inférieures et supérieures, afin de maintenir la partie centrale du corps 4 à une température inférieure (par exemple aux environs de 115°C) à celle de ses parties extrêmes (qui seront portées aux environs de 130°C).

Bien que le phénomène de convection thermique dans l'enceinte 33 soit limité du fait de l'utilisation d'un rayonnement cohérent, en sorte notamment que le col 3 ne subit pas un échauffement susceptible de le ramollir et de provoquer une altération de ses cotes dimensionnelles lors du soufflage (ce qui permet, comme on l'a constaté, d'orienter les préformes 2 col en haut), il peut apparaître préférable de ventiler un minimum la partie supérieure de l'enceinte 33, afin de créer un flux d'air frais autour du col 3.

Aussi, comme cela est représenté sur la figure 7, l'unité de chauffe 16 est-elle équipée d'un système de ventilation 44 générant un flux d'air 45 qui, à l'aplomb de l'enceinte 33, circule transversalement pour évacuer les calories drainées par le flux d'air 37 ascendant dû à la convection thermique naturelle. Ce système de ventilation 44 comprend par exemple un ventilateur 46 disposé dans un boîtier 47 placé du côté de la face externe 41 de la deuxième paroi 35 et présentant une ouverture 48 s'étendant à l'aplomb d'un bord supérieur 49 de la paroi 35, propre à canaliser transversalement le flux d'air 37 en provenance du ventilateur 46.

La chauffe de chaque préforme 2 s'effectue de la manière suivante.

La préforme 2, en provenance de l'unité d'alimentation 10, entre dans l'unité de chauffe 16 en suivant le chemin 23 longitudinal défini localement par la chaîne transporteuse.

La préforme 2 est entraînée en rotation autour de son axe A. Elle est frappée par les faisceaux laser 22 émis par les diodes 26 tout au long du trajet qu'elle parcourt dans l'enceinte 33. Initialement à température ambiante, le corps 4 de la préforme 2 est rapidement porté à une température voisine de 120°C, tandis que son col 3 est maintenu à température ambiante.

En sortie de l'enceinte 33, la préforme 2 est transférée vers l'unité d'étirage-soufflage 18 pour être conformée en récipient.

### 2.2. Exemple 2

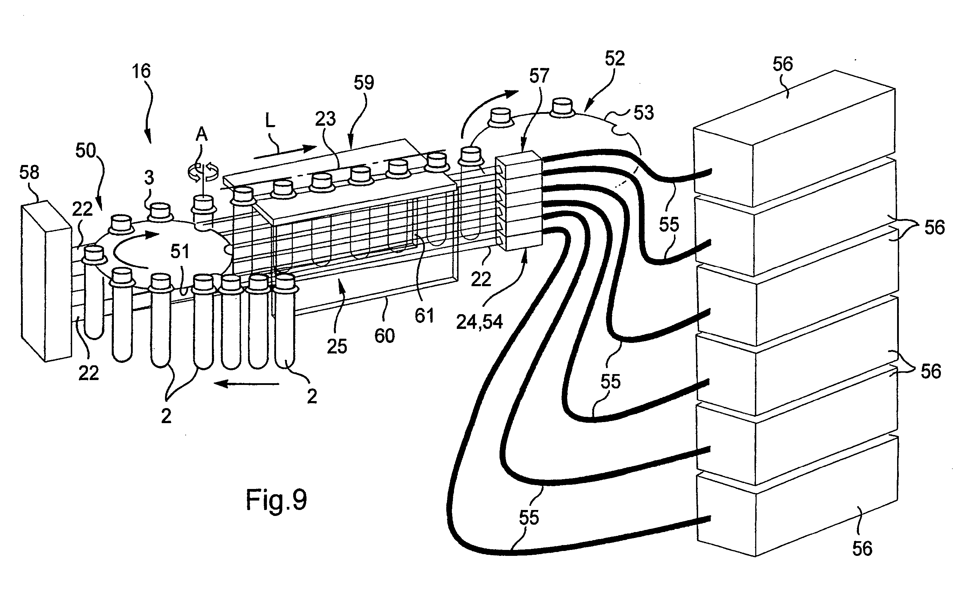

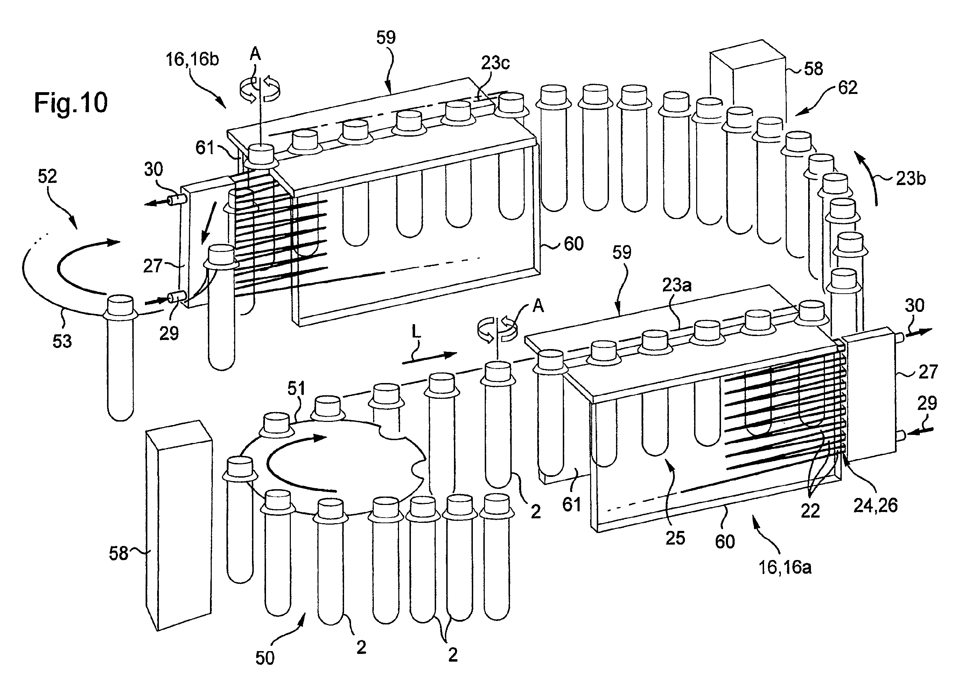

Le deuxième exemple de réalisation est décrit à présent en référence aux figures 9 et 10. Ce deuxième exemple comprend un premier mode de réalisation, illustré sur la figure 9, suivant lequel l'installation 1 comprend une unique unité de chauffe 16, ainsi qu'un second mode de réalisation qui, illustré sur la figure 10, constitue une variante du premier en ce que l'installation 1 comprend deux unités de chauffe 16 successives.

Suivant le premier mode de réalisation, le chemin 23 suivi par les préformes 2 au sein de l'unité de chauffe 16 est localement rectiligne, suivant une direction longitudinale L, entre une zone de transfert amont 50 où les préformes 2 froides sont amenées à l'unité de chauffe 16 par une roue de transfert amont 51, et une zone de transfert aval 52 où les préformes 2 chaudes sont évacuées de l'unité de chauffe 16 par une roue de transfert aval 53.

L'unité de chauffe 16 comprend plusieurs sources 24 laser superposées disposées à une extrémité aval du chemin 23, dans l'axe de celui-ci. Les sources 24 sont ici constituées par des optiques 54 de collimation reliées chacune par une fibre optique 55 à un générateur laser 56 à diode, et forment ensemble un bloc vertical 57 d'une hauteur sensiblement égale à celle des corps 4 des préformes 2.

Comme cela est visible sur la figure 9, les optiques 54 sont orientées de manière à générer des faisceaux 22 longitudinaux (linéaires ou plans) qui viennent successivement frapper les préformes 2 avant de rencontrer un écran 58 opaque formant puits d'énergie, disposé transversalement dans le prolongement du chemin 23, au-delà de la roue de transfert amont 51.

Ainsi, le long du chemin 23, chaque préforme 2 est progressivement chauffée par les faisceaux 22 laser dont l'énergie, transférée successivement aux préformes 2 qu'ils frappent et traversent, est d'abord, du point de vue de la préforme, faible à la sortie de la roue de transfert amont 51, puis croît au fur et à mesure que la préforme 2 approche des sources 24, avant d'être maximale au voisinage de celles-ci, avant que la préforme 2 ne soit embarquée par la roue de transfert aval 53.

Il est ainsi possible de réaliser un chauffage progressif des préformes 2 en n'utilisant qu'un bloc de sources laser, au lieu d'une matrice comme exposé dans le premier exemple décrit ci-dessus.

Toutefois, afin d'éviter une dissipation trop rapide de l'énergie des faisceaux laser, il est préférable d'utiliser des diodes laser de puissance supérieure. Ainsi, le laser retenu ici est un laser diode du type présenté ci-dessus (Cf §1), d'une puissance unitaire de 500 W.

Comme cela est illustré sur la figure 9, l'unité de chauffe 16 comprend une enceinte de confinement 59 comportant deux parois 60, 61 en regard, disposées de part et d'autre du chemin 23 entre les roues de transfert amont 51 et aval 53.

Ces parois 60, 61 présentent des faces internes réfléchissantes, qui confinent les faisceaux 22 laser en réfléchissant leurs composantes transversales issues de la diffraction par les préformes 2. On limite ainsi les pertes d'énergie tout en améliorant la sécurité de l'installation.

Bien que cela n'apparaisse pas sur la figure 9, l'unité de chauffe 16 peut être équipée d'un système de ventilation analogue à celui décrit ci-dessus dans le premier exemple de réalisation.

Suivant le second mode de réalisation, l'installation 1 comprend deux unités de chauffe 16 similaires à l'unité de chauffe 16 décrite ci-dessus dans le premier mode de réalisation, et disposées successivement sur le trajet des préformes 2, à savoir une première unité de chauffe 16a agencée pour porter les préformes 2 à une température intermédiaire (c'est-à-dire comprise entre la température ambiante, correspondant à la température initiale des préformes - aux environs de 20°C - et la température finale, préalable au formage - aux environs de 120°C), et une seconde unité de chauffe 16b agencée pour porter les préformes 2 à leur température finale (aux environs de 120°C).

Le chemin 23a suivi par les préformes 2 au sein la première unité de chauffe 16a est localement rectiligne, suivant une direction longitudinale L, entre une zone de transfert amont 51 où les préformes 2 froides sont amenées à la première unité de chauffe 16a par une roue de transfert amont 51, et une zone de transfert intermédiaire 62 où les préformes 2 tièdes sont transférées depuis la première'unité de chauffe 16a vers la seconde 16b.

Dans l'exemple représenté sur la figure 10, les unités de chauffe 16a, 16b sont disposées parallèlement l'une par rapport à l'autre, et le chemin 23b suivi par les préformes dans la zone de transfert intermédiaire 62 est courbe. Cette disposition permet d'éviter, les interférences entre les faisceaux 22 de la première unité de chauffe 16a et ceux de la seconde 16b.

Le chemin 23c suivi par les préformes 2 au sein de la seconde unité de chauffe 16b est, également, localement rectiligne et longitudinal, entre la zone de transfert intermédiaire 62 et une zone de transfert aval 52 où les préformes 2 chaudes sont embarquées transversalement par une roue de transfert aval 53.

Chaque unité de chauffe 16a, 16b comprend un bloc 27 de diodes laser superposées, d'une hauteur sensiblement égale à celle des corps 4 des préformes 2, et disposé à une extrémité aval du chemin 16a, 16c correspondant, dans l'axe de celui-ci.

Les blocs 27 de diodes sont par exemple du type de celui présenté ci-dessus (Cf. §1) et illustré sur la figure 2.

Comme cela est visible sur la figure 10, la première unité de chauffe 16a comprend un écran 58 opaque formant puits d'énergie, que viennent frapper les faisceaux 22 laser après avoir traversé successivement les préformes 2 présentes sur le chemin 23a, et disposé transversalement dans le prolongement du chemin 23a au-delà de la roue de transfert amont 51.

La seconde unité de chauffe 16b comprend également un tel écran 58 opaque, disposé quant à lui dans le prolongement du chemin 23c du côté de la zone de transfert intermédiaire 62.

Par ailleurs, comme cela est visible sur la figure 10, chaque unité de chauffe 16a, 16b comprend une enceinte de confinement 59 dont les parois 60, 61 réfléchissantes, placées de part et d'autre du chemin 23a, 23c correspondant, évitent la dispersion latérale des faisceaux laser 22.

Ainsi, les préformes 2 sont d'abord portées à une température intermédiaire, par exemple aux environs de 80°C, au sein de la première unité de chauffe 16a, puis, de là, à une température finale de 120°C environ au sein de la seconde unité de chauffe 16b avant d'être transférées vers l'unité d'étirage-soufflage 18.

Il convient de noter que plus de deux unités de chauffe seraient envisageables pour des applications particulières.

### 2.3. Exemple 3

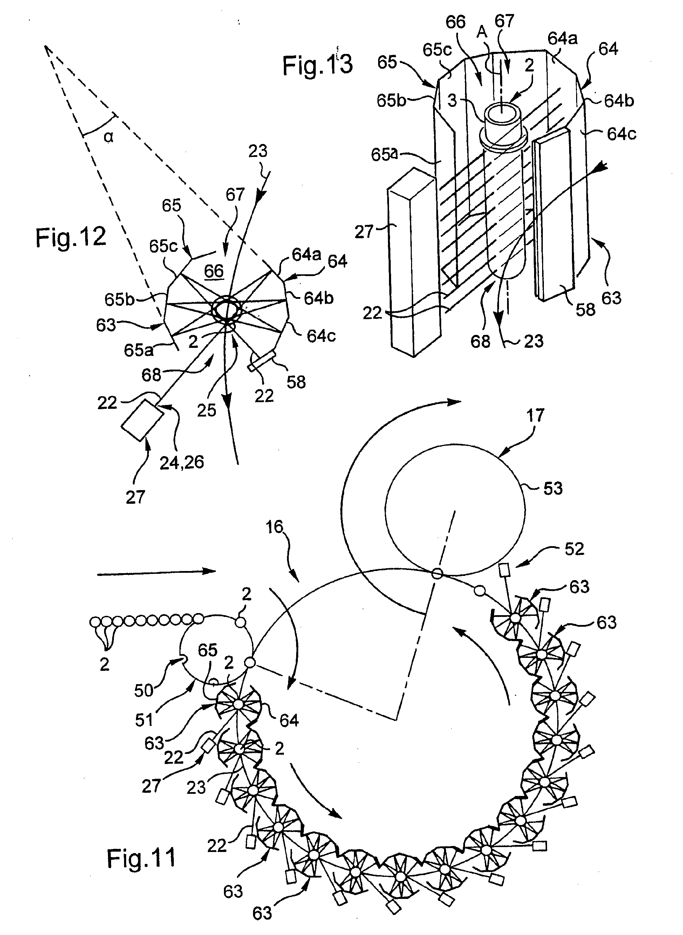

Le troisième exemple de réalisation est à présent décrit, en références aux figures 11 à 13.

Dans cet exemple, le chemin 23 des ébauches 2 au sein de l'unité de chauffe 16 est sensiblement circulaire et, comme cela est visible sur la figure 11, l'unité de chauffe 16 comporte une pluralité d'enceintes 63 adjacentes disposées le long du chemin 23, par lesquelles les préformes 2 transitent successivement.

Le chemin 23 est défini entre une roue de transfert amont 51, qui amène les préformes 2 depuis l'unité d'alimentation 10, et une roue de transfert aval 53 portant les moules d'étirage-soufflage.

Chaque enceinte 63 présente deux parois cylindriques en regard, à savoir une paroi interne 64 et une paroi externe 65, disposées de part et d'autre du chemin 23 et définissant conjointement une cavité interne 66 dans laquelle vient se positionner la préforme 2, l'axe A de cette dernière étant alors momentanément confondu avec un axe de symétrie de l'enceinte 63.

Chaque paroi 64, 65 présente plusieurs facettes 64a, 64b, 64c, 65a, 65b, 65c, réfléchissantes, adjacentes, tournées vers la cavité 66, chaque facette 64a, 64b, 64c d'une paroi 64 étant disposée face à une facette 65a, 65b, 65c correspondante de la paroi opposée 65, ces facettes 64a, 64b, 64c, 65a, 65b, 65c n'étant pas exactement parallèles deux à deux mais définissant conjointement une ouverture angulaire α de quelques degrés, comme cela est visible sur la figure 12.

Un interstice 67 amont et un interstice 68 aval sont définis entre les parois 64, 65, interstices 67, 68 par lesquels entre, puis sort, successivement, chaque préforme 2.

En outre, l'unité de chauffe 16 comprend, pour chaque enceinte 63, un écran 58 opaque adjacent à une facette 64c de la paroi interne 64, du côté de l'interstice aval 68.

L'unité de chauffe 16 comprend, pour chaque enceinte 63, un bloc 27 de diodes laser empilées, disposé en regard de l'une 64a des facettes de la paroi interne 64, bordant l'interstice amont 67. Les diodes lasers, dirigées vers cette facette 64a, sont agencées pour générer chacune un faisceau 22, soit linéaire, soit contenu dans un plan vertical, transversal par rapport au chemin 23 des préformes 2, le faisceau 22 formant avec la normale à la facette 64a un angle aigu (figure 12).

Ainsi, chaque faisceau 22 subit plusieurs réflexions successives sur les facettes 64a, 65a, 64b, 65b, 64c, 65c, avant de venir frapper l'écran 58 qui, formant un puits énergétique, absorbe complètement le faisceau 22 (figure 12).

Lorsqu'une préforme 2 est placée au centre de l'enceinte 63, col en haut, chaque faisceau 22 la frappe ainsi plusieurs fois dans des zones distinctes réparties sur sa circonférence, comme cela est représenté sur la figure 12.

Comme il ressort de la figure 11, chaque préforme 2 transite successivement par l'ensemble des enceintes 63, et l'on peut régler les diodes de manière que leur puissance croisse le long du chemin 23, la température des préformes 2 croissant par conséquent au fur et à mesure qu'elles avancent au sein de l'unité de chauffe 16.

De même que précédemment, les préformes 2 peuvent être entraînées en rotation autour de leur axe de révolution A, leur avance au sein de l'unité de chauffe 16 étant de préférence réalisée au pas à pas, chaque préforme 2 restant par exemple une fraction de seconde dans chaque enceinte 63.

Il est parfaitement envisageable que l'avance des préformes au sein de l'unité de chauffe 16 soit réalisée en continu, du fait de la forte capacité de pénétration des faisceaux laser au travers de la matière constitutive du corps des préformes.

Bien entendu, quel que soit l'exemple de réalisation retenu, il est possible de régler la vitesse de défilement des préformes 2 au sein de l'unité de chauffe.

De fait, les différents réglages (vitesse de défilement, puissance des diodes, longueur de l'enceinte) seront choisis par l'homme du métier en fonction du matériau retenu pour les préformes, ainsi que de la cadence machine imposée par la production.

Comme nous l'avons vu, le procédé et l'installation précédemment décrits permettent de chauffer des ébauches, teles que des préformes, de manière à la fois plus rapide et plus précise que par les procédés et installations connus.

Cette rapidité permet de limiter l'encombrement de l'unité de chauffe, tandis que les essais ont montré qu'il est possible, au moyen de faisceaux électromagnétiques cohérents, d'atteindre un rendement énergétique de 50%, ce qui paraissait impensable avec les procédés et installations connus.

Les essais ont en fait montré une pénétration énergétique du laser, dans les matériaux utilisés couramment dans cette application, supérieure à celle du rayonnement des lampes halogènes classiquement employés pour le chauffage, ce qui accroît l'uniformité de la température du matériau dans l'épaisseur de la préforme.

La précision du chauffage permet d'obtenir un profil vertical de chauffe qui corresponde de manière plus exacte au profil souhaité. Plus précisément, cette précision permet de réaliser des profils de chauffe jusqu'à présent impossibles à obtenir. Cela permet notamment de réviser la conception des préformes de manière à répartir différemment le poids (c'est-à-dire, en pratique, l'épaisseur de paroi) de celle-ci en fonction du profil de température souhaité pour un profil particulier de récipient.

En outre, le faible échauffement de l'air ambiant permet, de plus, de conserver l'orientation col en haut des préformes tout au long du procédé de fabrication des récipients, ce qui évite les opérations de retournement.

## Revendications

1. Procédé de fabrication d'un récipient à partir d'une ébauche (2) en matière thermoplastique, qui comporte :
- une étape de chauffe de l'ébauche (2), puis
- une étape de formage du récipient à partir de l'ébauche (2) ainsi chauffée,
procédé **caractérisé en ce que** la chauffe de l'ébauche (2) est réalisée au moyen d'une pluralité de faisceaux (22) issus d'une matrice de sources de rayonnement électromagnétique cohérent.

2. Procédé selon la revendication 1, dans lequel chaque faisceau (22) est plan.

3. Procédé selon l'une des revendications 1 ou 2, dans lequel chaque faisceau (22) est dirigé dans une direction générale prédéterminée, et dans lequel, lors de l'étape de chauffe, on fait suivre à l'ébauche (2), au moins localement, un chemin (23) sensiblement perpendiculaire à la direction du faisceau (22).

4. Procédé selon l'une des revendications 1 à 3, dans lequel, dans l'étape de chauffe, on entraîne l'ébauche (2) en rotation autour d'un axe prédéterminé.

5. Procédé selon la revendication 4, dans lequel ledit axe de rotation est confondu avec un axe (A) de révolution de l'ébauche (2).

6. Procédé selon l'une des revendications 1 à 5, dans lequel, l'ébauche (2) présentant un col (3) et un corps (4), le faisceau de rayonnement électromagnétique est dirigé vers le corps (4) de l'ébauche (2).

7. Procédé selon la revendication 6, dans lequel, lors de l'étape de chauffe, le col (3) de l'ébauche (2) est orienté vers le haut.

8. Procédé selon la revendication 6 ou 7, dans lequel on ventile le col (3) de l'ébauche (2).

9. Procédé selon l'une des revendications 1 à 8, dans lequel, dans l'étape de chauffe, le faisceau (22) subit au moins une réflexion sur uno surface réfléchissante.

10. Procédé selon l'une des revendications 1 à 9, dans lequel ledit faisceau (22) est un faisceau laser.

11. Procédé selon l'une des revendications 1 à 10, dans lequel le rayonnement du faisceau est un rayonnement infrarouge.

12. Procédé selon la revendication 11, dans lequel la longueur d'onde du rayonnement est inférieure ou égale à 1600 nm environ.

13. Procédé selon la revendication 12, dans lequel la longueur d'onde du rayonnement est comprise entre 700 nm et 1600 nm environ.

14. Installation pour la fabrication de récipients à partir d'ébauches (2) en matière thermoplastique, qui comporte une unité de chauffe (16) des ébauches (2) en vue du formage des récipients à partir des ébauches (2) ainsi chauffées, l'installation (1) définissant un chemin (23) destiné à être suivi par les ébauches (2) au sein de l'unité de chauffe (16), **caractérisée en ce que** l'unité de chauffe (16) comporte une matrice (43) de sources (24) de rayonnement électromagnétique cohérent superposées dirigée vers une zone (25) située sur le chemin (23) des ébauches (2).

15. Installation selon la revendication 14, dans laquelle, le chemin (23) des ébauches (2) étant sensiblement linéaire, ladite matrice (43) de sources (24) de rayonnement est dirigée transversalement par rapport audit chemin (23).

16. Installation selon la revendication 15, dans laquelle l'unité de chauffe (16) comporte une enceinte (33) comprenant une première et une deuxième parois (34, 35) en regard sensiblement parallèles au chemin (23) des ébauches (2), placées de part et d'autre de celui-ci et délimitant conjointement un volume interne (36), la première paroi (34) étant munie de ladite matrice (43)

17. Installation selon la revendication 16, dans laquelle la seconde paroi (35) au moins présente, du côté du volume interne (36), une surface interne (39) réfléchissante.

18. Installation selon la revendication 16 ou 17, dans laquelle l'unité de chauffe (16) comporte un système de ventilation (44) propre à générer un flux d'air (45) transitant par une zone située à l'aplomb de ladite enceinte (33).

19. Installation selon l'une des revendications 14 à 18, dans laquelle, les ébauches (2) présentant un axe (A) de révolution, l'unité de chauffe (16) comprend des moyens pour entraîner les ébauches (2) en rotation autour de leur axe (A).

20. Installation selon l'une des revendications 14 à 19, dans laquelle la source (24) de rayonnement électromagnétique cohérent est une source laser.

21. Installation selon la revendication 20, dans laquelle la source de rayonnement électromagnétique cohérent est une diode laser.

22. Installation selon la revendication 21, dans laquelle la diode laser est agencée pour émettre un faisceau (22) laser plan.

## Patentansprüche

1. Verfahren zur Herstellung eines Behälters ausgehend von einem Rohling (2) aus thermoplastischem Material, das aufweist:
- einen Schritt der Erwärmung des Rohlings (2), dann
- einen Schritt des Formens des Behälters ausgehend von dem so erwärmten Rohling (2),
wobei das Verfahren **dadurch gekennzeichnet ist, dass** die Erwärmung des Rohlings (2) mittels einer Vielzahl von Strahlen (22) erfolgt, die von einer Matrix von Quellen kohärenter elektromagnetischer Strahlung stammen.

2. Verfahren nach Anspruch 1, wobei jeder Strahl (22) flach ist.

3. Verfahren nach einem der Ansprüche 1 oder 2, wobei jeder Strahl (22) in eine vorbestimmte allgemeine Richtung gerichtet ist, und wobei im Erwärmungsschritt der Rohling (2), zumindest lokal, auf einem zur Richtung des Strahls (22) im Wesentlichen lotrechten Pfad (23) geleitet wird.

4. Verfahren nach einem der Ansprüche 1 bis 3, wobei im Erwärmungsschritt der Rohling (2) um eine vorbestimmte Achse in Drehung versetzt wird.

5. Verfahren nach Anspruch 4, wobei die Drehachse mit einer Drehsymmetrieachse (A) des Rohlings (2) zusammenfällt.

6. Verfahren nach einem der Ansprüche 1 bis 5, wobei, da der Rohling (2) einen Hals (3) und einen Körper (4) aufweist, der Strahl elektromagnetischer Strahlung zum Körper (4) des Rohlings (2) gerichtet ist.

7. Verfahren nach Anspruch 6, wobei während des Erwärmungsschritts der Hals (3) des Rohlings (2) nach oben gerichtet ist.

8. Verfahren nach Anspruch 6 oder 7, wobei der Hals (3) des Rohlings (2) belüftet wird.

9. Verfahren nach einem der Ansprüche 1 bis 8, wobei im Erwärmungsschritt der Strahl (22) mindestens eine Reflexion auf einer reflektierenden Fläche erfährt.

10. Verfahren nach einem der Ansprüche 1 bis 9, wobei der Strahl (22) ein Laserstrahl ist.

11. Verfahren nach einem der Ansprüche 1 bis 10, wobei die Strahlung des Strahls eine Infrarotstrahlung ist.

12. Verfahren nach Anspruch 11, wobei die Wellenlänge der Strahlung geringer als oder gleich etwa 1600 nm ist.

13. Verfahren nach Anspruch 12, wobei die Wellenlänge der Strahlung zwischen etwa 700 nm und 1600 nm liegt.

14. Anlage zur Herstellung von Behältern ausgehend von Rohlingen (2) aus thermoplastischem Material, die eine Erwärmungseinheit (16) der Rohlinge (2) zum Formen der Behälter ausgehend von den so erwärmten Rohlingen (2) enthält, wobei die Anlage (1) einen Pfad (23) definiert, dem die Rohlinge (2) innerhalb der Erwärmungseinheit (16) folgen sollen, **dadurch gekennzeichnet, dass** die Erwärmungseinheit (16) eine Matrix (43) von Quellen (24) kohärenter elektromagnetischer Strahlung aufweist, die zu einer Zone (25) gerichtet ist, welche sich auf dem Pfad (23) der Rohlinge (2) befindet.

15. Anlage nach Anspruch 14, wobei bei im Wesentlichen linearem Pfad (23) der Rohlinge (2) die Matrix (43) von Strahlungsquellen (24) quer bezüglich des Pfads (23) ausgerichtet ist.

16. Anlage nach Anspruch 15, wobei die Erwärmungseinheit (16) einen Raum (33) aufweist, der eine erste und eine zweite gegenüberliegende Wand (34, 35) im Wesentlichen parallel zum Pfad (23) der Rohlinge (2) enthält, die zu beiden Seiten von diesem angeordnet sind und zusammen ein Innenvolumen (36) definieren, wobei die erste Wand (34) mit der Matrix (43) versehen ist.

17. Anlage nach Anspruch 16, wobei mindestens die zweite Wand (35) auf der Seite des Innenvolumens (36) eine innere reflektierende Fläche (39) aufweist.

18. Anlage nach Anspruch 16 oder 17, wobei die Erwärmungseinheit (16) ein Belüftungssystem (44) aufweist, das einen Luftstrom (45) erzeugen kann, der durch eine Zone geht, die sich senkrecht zum Raum (33) befindet.

19. Anlage nach einem der Ansprüche 14 bis 18, wobei, da die Rohlinge (2) eine Drehsymmetrieachse (A) aufweisen, die Erwärmungseinheit (16) Einrichtungen enthält, um die Rohlinge (2) um ihre Achse (A) in Drehung zu versetzen.

20. Anlage nach einem der Ansprüche 14 bis 19, wobei die Quelle (24) kohärenter elektromagnetischer Strahlung eine Laserquelle ist.

21. Anlage nach Anspruch 20, wobei die Quelle kohärenter elektromagnetischer Strahlung eine Laserdiode ist.

22. Anlage nach Anspruch 21, wobei die Laserdiode eingerichtet ist, um einen flachen Laserstrahl (22) zu emittieren.

## Claims

1. Method for producing a container from a thermoplastic parison (2), which involves:
- a step of heating the parison (2), then
- a step of forming the container from the parison (2) thus heated,
the method being **characterized in that** the heating of the parison (2) is performed by means of a plurality of beams (22) emanating from a matrix of sources of coherent electromagnetic radiation.

2. Method according to Claim 1, in which each beam (22) is planar.

3. Method according to either of Claims 1 and 2, in which each beam (22) is directed in a predetermined overall direction and in which, during the heating step, the parison (2) is at least locally made to follow a path (23) substantially perpendicular to the direction of the beam (22).

4. Method according to one of Claims 1 to 3, in which, in the heating step, the parison (2) is rotated about a predetermined axis.

5. Method according to Claim 4, in which said axis of rotation coincides with an axis (A) of revolution of the parison (2).

6. Method according to one of Claims 1 to 5, in which, with the parison (2) having a neck (3) and a body (4), the beam of electromagnetic radiation is directed toward the body (4) of the parison (2).

7. Method according to Claim 6, in which, during the heating step, the neck (3) of the parison (2) is directed upward.

8. Method according to Claim 6 or 7, in which the neck (3) of the parison (2) is ventilated.

9. Method according to one of Claims 1 to 8, in which, in the heating step, the beam (22) is reflected at least once off a reflective surface.

10. Method according to one of Claims 1 to 9, in which said beam (22) is a laser beam.

11. Method according to one of Claims 1 to 10, in which the radiation from the beam is infrared radiation.

12. Method according to Claim 11, in which the wavelength of the radiation is less than or equal to about 1600 nm.

13. Method according to Claim 12, in which the wavelength of the radiation is between about 700 nm and 1600 nm.

14. Installation for producing containers from thermoplastic parisons (2), which comprises a heating unit (16) for heating the parisons (2) with a view to forming the containers from the parisons (2) thus heated, the installation (1) defining a path (23) but the parisons (2) are intended to follow within the heating unit (16), **characterized in that** the heating unit (16) comprises a matrix (43) of sources (24) of coherent electromagnetic radiation directed toward a region (25) situated on the path (23) of the parisons (2).

15. Installation according to Claim 14, in which, with the path (23) of the parisons (2) being substantially linear, said matrix (43) of sources (24) of radiation is directed transversely with respect to said path (23).

16. Installation according to Claim 15, in which the heating unit (16) comprises a chamber (33) comprising a first wall and a second wall (34, 35) facing one another and substantially parallel to the path (23) of the parisons (2), these walls being positioned one on each side of this path and together delimiting an internal volume (36), the first wall (34) being equipped with said matrix (43).

17. Installation according to Claim 16, in which the second wall (35) at least, on the same side as the internal volume (36), has a reflective internal surface (39).

18. Installation according to Claim 16 or 17, in which the heating unit (16) comprises a ventilation system (44) able to generate an air flow (45) passing through a region situated vertically in line with said chamber (33).

19. Installation according to one of Claims 14 to 18, in which, with the parisons (2) having an axis (A) of revolution, the heating unit (16) comprises means for rotating the parisons (2) about their axis (A).

20. Installation according to one of Claims 14 to 19, in which the source (24) of coherent electromagnetic radiation is a laser source.

21. Installation according to Claim 20, in which the source of coherent electromagnetic radiation is a laser diode.

22. Installation according to Claim 21, in which the laser diode is designed to emit a planar laser beam (22).
